# EUROPÄISCHE PATENTANMELDUNG

(11) **EP 0 591 892 A1**
(43) Veröffentlichungstag der Anmeldung: **13.04.1994**
(21) Anmeldenummer: 93115992.5
(22) Anmeldetag: 04.10.1993
(51) Int. Cl.: C08F 232/08, C08F 210/02, G11B 7/24

(54) **Substrat aus zumindest einem Cycloolefin-Copolymer für Aufzeichnungsmedien und Verfahren zu seiner Herstellung**

(30) Priorität: 08.10.1992 DE 4233851
(71) Anmelder: HOECHST AKTIENGESELLSCHAFT, D-65926 Frankfurt am Main (DE)
(72) Erfinder: Brekner, Michael-Joachim, Dr., D-60529 Frankfurt (DE); Weller, Thomas, Dr., D-55130 Mainz (DE)

(57) **Zusammenfassung**

Als Ausgangsmaterial für Substrate von optischen Speicherplatten werden entweder Cycloolefin-Copolymere (COC) durch ein spezielles Polymerisationsverfahren hergestellt, bei dem die Polymerisation zu einem Zeitpunkt abgebrochen wird, zu dem die Molmassenverteilung M_{w}/Mₙ < 2,0 ist, oder es werden COC-Legierungen hergestellt, die aus einer ersten Komponente bestehen, mit M_{w} < 30000 g/mol und M_{w}/Mₙ ≦ 2,0, bevorzugt < 2,0, und einer zweiten Komponente mit M_{w} > 15000 g/mol und M_{w}/Mₙ kleiner/gleich 4 und größer/gleich 2. Das Substrat wird durch thermische Verformung entweder eines einzelnen COC mit einer Molmassenverteilung M_{w}/Mₙ < 2 oder einer Legierung aus einem solchen COC und einem oder mehreren COC mit einer Molmassenverteilung 2,0 ≦ M_{w}/Mₙ < 4 und M_{w} zwischen 15000 und 250000 g/mol hergestellt.

## Beschreibung

Die Erfindung betrifft ein Substrat aus zumindest einem Cycloolefin-Copolymer für Aufzeichnungsmedien und ein verfahren zu seiner Herstellung.

Zur Herstellung von Aufzeichnungsmedien, wie optischen Informationsträgern, z.B. Optical Disks oder Compact Disks, werden üblicherweise auf ein vorgeprägtes Substrat aus Polycarbonat-Harz, Polymethylmethacrylat, Epoxyharz, Polysulfon, Polyethersulfon oder Polyetherimid verschiedene Schichten aus Nitriden, Oxiden, Seltenerd-Übergangsmetall-Legierungen aufgesputtert. Die Wiedergabegenauigkeit der aufgezeichneten Information und die Langzeitstabilität der Informationsträger ist dabei stark materialabhängig; die thermische Formstabilität und die Doppelbrechung des Substratmaterials beispielsweise beeinflussen die Wiedergabegenauigkeit maßgeblich, während die Feuchtigkeitsaufnahme der Kunststoffe die Langzeitstabilität der physikalischen Eigenschaften der Aufzeichnungsschichten ganz wesentlich beeinflußt. Die Substrate werden in Spritzgußtechnik hergestellt, wobei mittels eines Originals (Stamper) die Rillen- bzw. Pitmatrix auf die Kunststoffsubstrate übertragen wird. Die Originaltreue dieser Kopie hängt sehr stark von der Verarbeitbarkeit des Spritzgußmaterials ab. Es ist bekannt, daß polymere Materialien, die bei Verarbeitungsbedingungen eine gute Fließfähigkeit aufweisen, auch eine gute Abbildungsqualität gewährleisten.

In der EP-A 0 310 680 ist ein Aufzeichnungsmedium (MOD) in Gestalt einer magnetooptischen Speicherplatte mit einem Substrat aus einem amorphen Ethylentetracyclododecencopolymer beschrieben, welches eine magnetooptische Aufzeichnungsschicht aus einer quaternären, amorphen Seltenerd-Übergangsmetall-Legierung aus Tb, Fe, Co mit Pt oder Pd als weitere Legierungskomponente trägt.

Aus der EP-A 0 387 016 ist aus Beispiel 4 eine magnetooptische Aufzeichnungsschicht aus Te, Ge und Cr bekannt, die auf ein Substrat aus einem amorphen Copolymer von Ethylen mit 1,4,5,8-Dimethano-1,2,3,4,4a,5,8,8a-Octahydronaphthalen, abgekürzt DMON, aufgesputtert ist.

Weitere bekannte Substratmaterialien sind Polymerlegierungen von Polycarbonat und Polystyrol und Cycloolefincopolymere, wie sie in dem US-PS 4,614,778 und in der EP-A 0 387 018, Spalte 5, Zeilen 5 bis 24, beschrieben sind.

Der Aufbau einer Speicherplatte (OD), für die sich die Substrate der Erfindung eignen, ist in der deutschen Patentanmeldung P 41 37 427.4 beschrieben.

Die Wiedergabegenauigkeit der aufgezeichneten Information und die Langzeitstabilität werden maßgeblich vom verwendeten Kunststoffsubstrat beeinflußt, das heißt von der Verarbeitbarkeit des Rohmaterials sowie der thermischen Stabilität des Substrats. Die Übertragung der Rillenmatrix des Stampers auf das Substrat beim Spritzgießvorgang ist bei den verwendeten Kunststoffsubstraten aus PC, PMMA und den bisher bekannten COC (Cycloolefin(co)polymere) verbesserungswürdig. Unter anderem könnte die Ausschußrate bei der Plattenherstellung gesenkt werden, bei gleichzeitiger Erhöhung der Qualität der von der Stampermatrix übertragenen Struktur.

Aufgabe der Erfindung ist es, die Aufzeichnungs- und Wiedergabequalität für optische Aufzeichnungsmedien unter Beibehaltung der thermischen Formbeständigkeit, d.h. ohne Einbußen bei den mechanischen und thermischen Eigenschaften der Substrate, zu verbessern.

Diese Aufgabe wird erfindungsgemäß durch ein Substrat aus zumindest einem Cycloolefin-Copolymer in der Weise gelöst, daß das Cycloolefin-Copolymer eine Molmassenverteilung M_{w}/Mₙ kleiner 2 und ein Molekulargewicht M_{w} kleiner/gleich 30000 g/mol aufweist und eine Glastemperatur von 120 bis 220 °C besitzt.

Dabei betragen die Dichte des Cycloolefin-Copolymers 1,01 bis 1,08 g/cm² und der Brechungsindex 1,52 bis 1,54.

In Ausgestaltung der Erfindung betragen der E-Modul des Cycloolefin-Copolymers 3,0 bis 4,0 GPa und die Reißspannung 30 bis 75 MPa. Bevorzugte Ausführungsbeispiele bestehen aus einem Norbornen-Ethylen-Copolymer oder einem Tetracyclododecen-Ethylen-Copolymer.

In Weiterbildung der Erfindung sind zwei oder mehr Cycloolefin-Copolymere mit unterschiedlichen Molmassen miteinander legiert, bei denen die Glastemperaturen gleich sind oder sich um nicht mehr als 20 °C voneinander unterscheiden. Zweckmäßigerweise ist ein niedermolekulares Cycloolefin-Copolymer mit einem Molekulargewicht kleiner/gleich 30000 g/mol als erste Legierungskomponente mit einem oder mehreren höhermolekularen Cycloolefin-Copolymeren mit einem Molekulargewicht gleich oder größer 15000 g/mol als zweite bzw. weitere Legierungskomponente kombiniert.

Die weitere Ausgestaltung des Substrats ergibt sich aus den Merkmalen der Ansprüche 8 bis 10.

Ein Verfahren zur Herstellung eines Substrats für Aufzeichnungsmedien aus zumindest einem Cycloolefin-Copolymer, welches durch Polymerisation ohne Ringöffnung hergestellt wurde, nach dem Gattungsbegriff des Verfahrensanspruchs 11, zeichnet sich dadurch aus, daß ein Cycloolefin der Formel VII oder ein acyclisches 1-Olefin der Formel VIII in Norbornenlösung unter Zugabe eines Metallocens in Form einer Katalysatorlösung, Katalysatorsuspension oder eines geträgerten Katalysators polymerisiert wird, daß ein Reaktionsabbruch der Polymerisation 10 bis 60 Minuten nach Beginn der Polymerisation erfolgt, daß das gestoppte Polymerisationsmedium in einer Flüssigkeit aus einem Keton, Alkohol, Ester, Amid oder Wasser gefällt oder suspendiert und danach abfiltriert wird, daß das abfiltrierte COC-Polymer getrocknet wird und daß das getrocknete COC-Polymer bei einer Temperatur oberhalb 210 °C thermoplastisch zu Platten verarbeitet wird.

Bei dem Verfahren wird die Polymerisation zu einem Zeitpunkt abgebrochen, zu dem die Molmassenverteilung M_{w}/Mₙ < 2,0, insbesondere M_{w}/Mₙ ≦ 1,7 oder M_{w}/Mₙ ≦ 1,4 ist und M_{w} kleiner 30000 ist. Bei einer Variante des Verfahrens wird die Polymerisation zu einem Zeitpunkt abgebrochen, zu dem Molmassenverteilung M_{w}/Mₙ ≧ 2,00 und kleiner/gleich 4,00 ist.

Die Molmasse des COC-Polymers kann mittels Wasserstoffdosierung auf kleiner 30000 g/mol eingestellt und die Polymerisation zeitlich nicht begrenzt werden.

In weiterer Ausgestaltung des Verfahrens werden ein COC-Polymer mit einer Molmassenverteilung M_{w}/Mₙ < 2,0 und zumindest ein COC-Polymer mit einer Molmassenverteilung ≧ 2,0 und kleiner/gleich 4,0 in Lösung oder in Schmelze zu einer Polymerlegierung verarbeitet. Dabei hat beipsielsweise das COC-Polymer eine Molmasse von 700 bis 30000 g/mol und zumindest ein weiteres Cycloolefin-Copolymer eine Molmasse von 15000 bis 250000 g/mol.

Das so hergestellte COC-Polymer bzw. die Polymerlegierung wird zu Platten gepreßt, spritzgegossen oder extrudiert.

Die verfahrensmäßige weitere Ausgestaltung der Erfindung ergibt sich aus den Merkmalen der Ansprüche 16 bis 18.

Das neue Substrat wird hergestellt aus einem einzelnen Cycloolefin-Copolymer oder einer Legierung zweier Cycloolefin-Copolymere mit sehr ähnlicher bis gleicher Glastemperatur, jedoch unterschiedlichen Molmassen. Die Legierungskomponenten wiederum werden hergestellt durch Polymerisation ohne Ringöffnung von 0,1 bis 100 Gew.%, bezogen auf die Gesamtmenge der Monomeren, mittels Metallocen und Katalysator, mindestens einem Monomeren der Formel I, II, III, IV, V oder VI 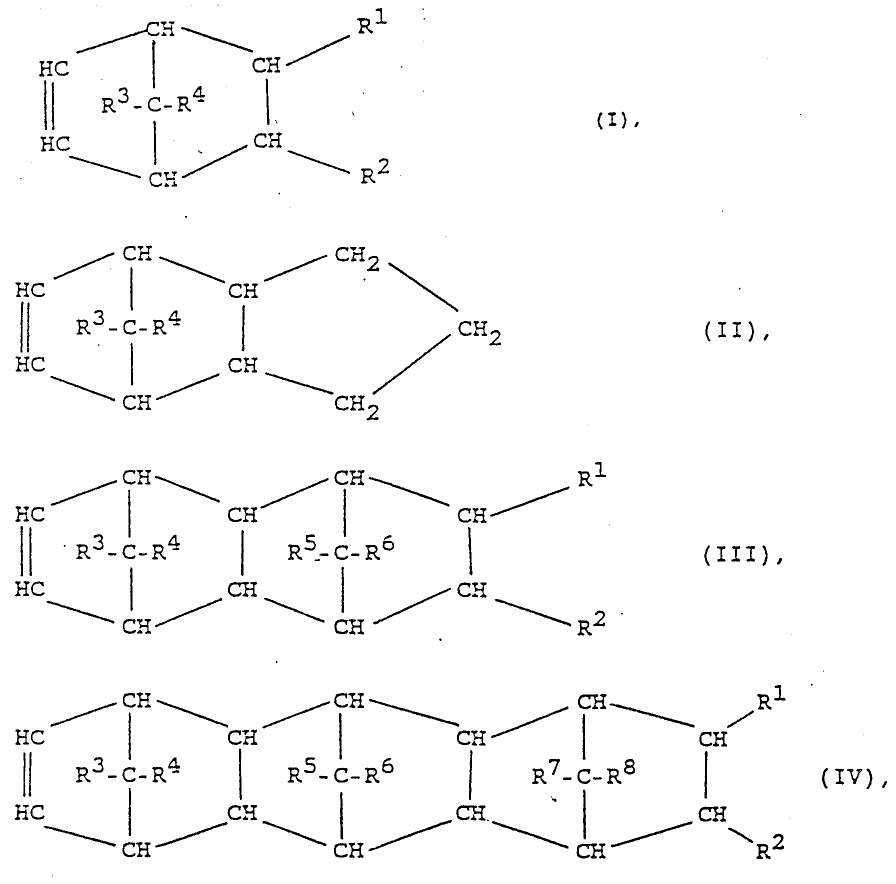 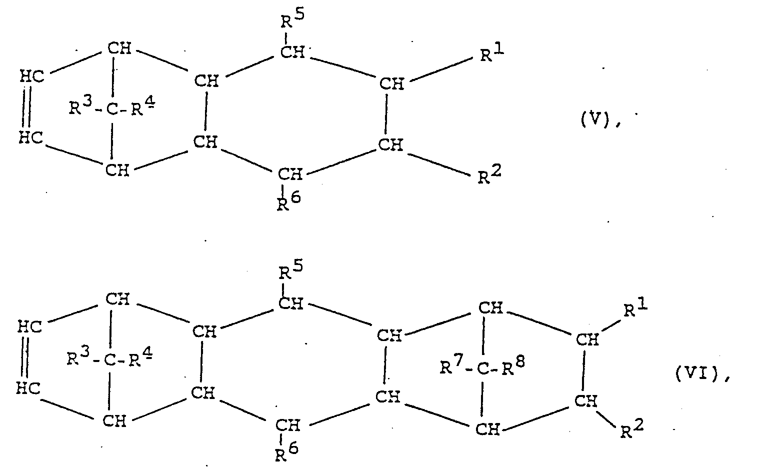
worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 99,9 Gew.%, bezogen auf die Gesamtmenge der Monomeren, eines Cycloolefins der Formel VII 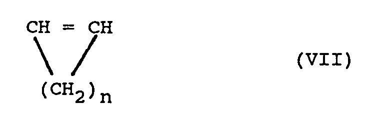
worin n eine Zahl von 2 bis 10 ist, und 0 bis 99,9 Gew.%, bezogen auf die Gesamtmenge der Monomeren, mindestens eines acyclischen 1-Olefins der Formel VIII 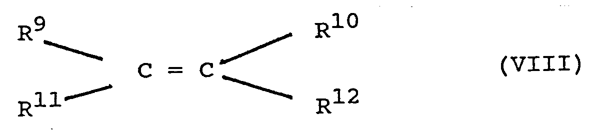
worin R⁹, R¹⁰, R¹¹ und R¹² gleich oder verschieden sind und ein Wasserstoffatom oder einen C₁-C₈-Alkylrest bedeuten, bei Temperaturen von -78 °C bis 150 °C und einem Druck von 0,01 bis 64 bar.

Das COC-Substratmaterial gewährleistet durch eine verbesserte Fließfähigkeit bei Verarbeitungsbedingungen eine höhere Abbildungsqualität beim Präzisionsspritzguß.

Es wurde überraschend gefunden, daß niedermolekulare, engverteilte COC, hergestellt nach dem erfindungsgemäßen Polymerisationsverfahren, eine verbesserte Fließfähigkeit in der Schmelze gegenüber bekannten COC aufweisen, ohne daß ihre thermische Formbeständigkeit dadurch beeinträchtigt wird. Die beschriebenen COC führen bei ihrer Verarbeitung zu Optical Disks oder Compact Disks zu verbesserten Abbildungsqualitäten. Darüberhinaus zeigen Legierungsversuche überraschenderweise, daß auch mit bestimmten COC-Legierungen, die nur anteilmäßig und speziell dafür hergestellte COC-Komponenten enthalten, deutlich verbesserte Fließfähigkeiten erzielt werden können. Die COC-Legierungen liefern gleichfalls unter Erhalt der thermischen Formbeständigkeit verbesserte Abbildungsqualitäten der OD- und CD-Substrate.

Die Legierungen erzeugen ein multimodales Gelpermeationschromatogramm, d.h. es werden Kurven mit mindestens zwei Maxima erhalten. Molmassenverteilungen von Polymeren werden heutzutage routinemäßig mit GPC bestimmt. Dabei wird eine gelöste Polymerprobe über GPC-Säulen nach ihrem hydrodynamischen Volumen, d.h. nach ihren Molekülgrößen, nicht nach dem Molgewicht, getrennt (Elias "Makromoleküle", Bd. 1, 5. Auflage, Basel, 1990). Der Träger in den GPC-Säulen ist ein Gel. Als Gele werden bei organischen Lösungsmitteln meist vernetzte Poly(styrol)e verwendet. Über eine Eichung mit bekannten Substanzen wird aus dem gemessenen Chromatogramm neben den mittleren Molekulargwichten M_{w}, Mₙ die Molmassenverteilung M_{w}/Mₙ bestimmt.

Voraussetzungen für die GPC-Untersuchungen sind u.a. die Abwesenheit von Aggregaten, d.h. einer molekulardispersen Lösung der Probe, im Lösungsmittel sowie die Auftrennung ohne Adsorptionsphänomene, zu denen die Wechselwirkung mit dem Säulenmaterial zählt. Die erwähnten GPC-Analysen wurden mit einem Waters GPC 150-C Gerät mit IR- und UV-Detektion und Polethylen als Eichstandards für die Säulen des Geräts durchgeführt.

Gegenstand der Erfindung sind zum einen COCs mit enger Molmassenverteilung und zum anderen COC-Legierungen aus zwei oder mehr Komponenten, die ebenfalls enge Verteilungen aufweisen können, jedoch nicht müssen. Vorzugsweise bestehen die COC aus einem Norbornen-Ethylen- oder Tetracyclododecen-Ethylen-Copolymer und weisen eine thermische Formbeständigkeit für einen Bereich der Glastemperatur von 100°C bis 220°C auf.

Die Herstellung der COC erfolgt nach den in den europäischen Patentanmeldungen 0 485 893 und 0 501 370 beschriebenen Verfahren. Die wesentlichen Eigenschaften der Polymere können wie folgt zusammengefaßt werden:
- das Material ist amorph und besitzt eine Glastemperatur zwischen 100°C und 220°C,
- ist farblos und transparent,
- besitzt eine Dichte von 1.01 bis 1.08 g/cm³,
- der Brechungsindex beträgt 1,52 bis 1,54,
- die Wasseraufnahme bei 23°C und 85 % relativer Feuchte ist kleiner 0,04 %
- der E-Modul beträgt 3,0 bis 4,0 GPa
- die Reißspannung beträgt 30 bis 75 MPa
- die Löslichkeit ist in Toluol, Xylol, Cyclohexan, Exxsol, Chloroform und Diethylether gegeben,
- Unlöslichkeit in Wasser, Alkohole, Ketone (Aceton), Ester, Amide (DMF, DMAC, NMP), ist gegeben
- besitzen chemische Resistenz gegen wäßrige und konzentrierte Säuren, wie HCL, H₂SO₄, und Basen, wie NaOH oder KOH.

Eine typische, wesentliche Eigenschaft der COC-Basistypen ist ihre geringe inhärente Doppelbrechung, d.h. eine geringe Anisotropie der molekularen Polarisierbarkeit, sowie ihre Hydrolysebeständigkeit.

Die Legierungen können in der Schmelze oder in Lösung hergestellt werden. Sie weisen jeweils eine für bestimmte Substrat-Anwendungen günstige Eigenschaftskombination der Komponenten auf.

Um anwendungsgünstige Schmelzeigenschaften zu erreichen, können auch mehrere erfindungsgemäße Polymere miteinander legiert werden. Die Legierungen bestehen aus Mischungen unterschiedlicher COC, die aber die gleiche oder eine um nicht mehr als nur 20°C unterschiedliche Glastemperatur aufweisen. Mindestens eine niedermolekulare Komponente mit einem M_{w} zwischen 700 und 30000 g/mol wird mit einer oder mehreren höhermolekularen Komponenten mit M_{w} von ≧ 15000 g/mol kombiniert. Für das mittlere Molekulargewicht M_{w} der höhermolekularen Legierungskomponente ist die obere Grenze offen, jedoch liegt eine praktikable Grenze bei etwa 250000 g/mol. Die Molekulargewichte werden, wie schon beschrieben, mittels Gelpermeationschromatographie und Polyethylen-Standard bestimmt. Ein Maß für die Molekulargewichte ist dabei die nach DIN 51562 bestimmte Viskositätszahl VZ. Die GPC-Analyse liefert Diagramme mit bimodaler Molekulargewichtsverteilung. Niedere Viskosität η bei Verarbeitungsbedingungen bedeutet gute Fließfähigkeit und somit hohe Präzision bei der Wiedergabe von Strukturen des Stampers beim Preßvorgang bzw. von Strukturen der Gußform beim Spritzgießen. Die Viskosität η ist abhängig von der Temperatur und der Scherung, die bei der Messung durch die Frequenz einer rotierenden Scheibe festgelegt wird, zwischen der und einer weiteren Scheibe die zu messende Probe eingelegt ist. Die Viskosität η liegt für die erfindungsgemäßen, reinen Cycloolefin-Copolymere, wie auch für die erfindungsgemäßen COC-Legierungen im Bereich von:
η < 4.10³ Pa.s bei 270 °C und einer Frequenz von 1 rad/s bzw. η < 2.10³ Pa·s bei 270 °C und einer Frequenz von 10 rad/s.

Für die Molmassenverteilung M_{w}/Mₙ der Legierungskomponenten gilt, daß sie für die erste Komponente größer/gleich 1,00 und kleiner 2,10, bevorzugt kleiner 2,0, und für die zweite Komponente größer/gleich 2,00 und kleiner/gleich 4,00 sein soll. Besteht das Substrat aus einem einzigen Cycloolefin-Copolymer, liegt die Molmassenverteilung M_{w}/Mₙ im Bereich 1,10 ≦ M_{w}/Mₙ < 2,0.

Es resultieren COC-Blends mit sehr guten Fließeigenschaften, die sich besonders für den Präzisionsspritzguß zur Herstellung von Substraten für optische Aufzeichnungmaterialien, wie Optical Disks, Compact Disks, Audio- und Videodisks und dergleichen, eignen.

### Beispiele:

Die in den folgenden Beispielen angegebenen Glastemperaturen (Tg) wurden mittels DSC (Differential Scanning Calorimetry) bei einer Aufheizrate von 20°C/min bestimmt. Hierzu wurden die thermischen Analysen mit einem Perkin-Elmer-DSC7-Gerät durchgeführt, wobei die zweite Heizkurve herangezogen wurde. Die Molmassenverteilung (M_{w}/Mₙ) und das Molekulargewicht (M_{w}) der Reaktionsprodukte wurden durch Gelpermeationschromatographie gemäß den voranstehenden Angaben bestimmt.

### Beispiel 1

Ein sauberer und trockener 1,5-dm³-Polymerisationsreaktor mit Rührer wurde mit Stickstoff und dann mit Ethylen gespült und mit 575 ml einer 85 vol.%igen toluolischen Norbornenlösung gefüllt.

Unter Rühren wurde dann der Reaktor auf einer Temperatur von 70 °C gehalten und der Norbornenlösung 3 bar Ethylen Überdruck aufgedrückt.

Danach wurden 20 cm³ toluolische Methylaluminoxanlösung (MAO-Lsg.) (10,1 Gew.% Methylaluminoxan mit Molmasse 1300 g/mol nach kryoskopischer Bestimmung) in den Reaktor dosiert und die Mischung 15 Min. bei 70 °C gerührt, wobei durch Nachdosieren der Ethylendruck bei 3 bar gehalten wurde. Parallel dazu wurden 10 mg Fluorenyl-cyclopentadienyl-diphenylcarbyl-zirkoniumdichlorid in 20 cm³ toluolischer Methylaluminoxanlösung (Konzentration und Qualität siehe oben) gelöst und durch 15-minütiges Stehenlassen voraktiviert. Dann wurde die Lösung des Komplexes in den Reaktor dosiert. Unter Rühren (750 UPM) wurde dann bei 70 °C polymerisiert, wobei der Ethylendruck durch Nachdosieren bei 6 bar gehalten wurde.

Im Abstand von 15 Min. nach der Katalysatorzugabe wurden vier 50-ml-Proben aus dem Reaktionsmedium über eine Schleuse entnommen, die in der nachstehenden Tabelle 1 als Proben A bis D bezeichnet sind. Von diesen Proben wurden M_{w}, M_{w}/Mₙ und die Glastemperatur bestimmt.

Die Proben wurden schnell in ein Rührgefäß abgelassen, in dem 100 cm³ Isopropanol als Stopper vorgelegt waren, der den Reaktionsabbruch der Polymerisation herbeiführt. Die Mischung wurde in 2 dm³ Aceton eingetropft, 10 min gerührt und dann der suspendierte polymere Feststoff abfiltriert.

Das abfiltrierte Polymer wurde dann in 2 dm³ einer Mischung aus zwei Teilen 3-normaler Salzsäure und einem Teil Ethanol gegeben und diese Suspension zwei Stunden gerührt. Das Polymer wurde dann erneut abfiltriert, mit Wasser neutral gewaschen und bei 80 °C und 0,2 bar 15 Stunden getrocknet.

Die Eigenschaften der Proben sind in Tabelle 1 wiedergegeben. Dabei zeigen die Probe A bis Probe D deutlich die Entwicklung des Molekulargewichts M_{w} (Erhöhung) und die Molmassenverteilung (Verbreiterung) mit fortschreitender Reaktionszeit an. Werden diese Werte über der Reaktionszeit aufgetragen, so kann aus der so erhaltenen Kurve jeweils der Zeitpunkt bestimmt werden, zu dem die Polymerisation abgebrochen werden muß, um die vorgegebenen Bedingungen für M_{w}/Mₙ ≦ 2,0 und M_{w} ≦ 30000 g/mol für die bevorzugte erste Legierungskomponente einzuhalten.

Die zweite Komponente mit 2,0 ≦ M_{w}/Mₙ ≦ 4,0 und M_{w} ≧ 15000 g/mol kann entweder analog der ersten durch Abbruch der Polymerisation mit dem gewünschten Molekulargewicht hergestellt werden, oder mit Hilfe einer gezielten Wasserstoffregelung, was bedeutet, daß unmittelbar nach Zugabe des Katalysators eine bestimmte Menge Wasserstoff über eine Schleuse der Reaktion zugeführt wird. Das Wasserstoff-zu-Ethen-Verhältnis muß während der Reaktion konstantgehalten werden, um ein M_{w}/Mₙ nahe 2 zu erreichen. Je höher das Wasserstoff-zu-Ethen-Verhältnis ist, desto niedriger fällt die Molmasse der COC an. Auch in diesem Fall kann mit Hilfe einer Eichung ein gewünschtes Molekulargewicht angesteuert werden.

**Tabelle 1**

| Probe | Zeit nach Kat.-Zugabe (min) | Glastemperatur T_{g} (°C) | M_{w} (g/mol) | M_{w}/Mₙ |
|---|---|---|---|---|
| A | 15 | 162 | 2,06x10⁴ | 1,7 |
| B | 30 | 161 | 3,25x10⁴ | 2,2 |
| C | 45 | 159 | 3,95x10⁴ | 2,2 |
| D | 60 | 158 | 4,57x10⁴ | 2,5 |

Die Proben A bis D dienen nur zur Festlegung der Kurven M_{w}/Mₙ und M_{w} in Abhängigkeit von der Reaktionszeit, d.h. der Zeit von der Zugabe des Katalysators bis zum Reaktionsabbruch. Die Proben A bis D stellen jedoch keineswegs explizit ausgewählte Cycloolefin-Copolymere dar, die einzeln oder als erste Legierungskomponente in einem Blend verwendet werden könnten. Der Tabelle 1 ist zu entnehmen, daß bei den in diesem Beispiel gewählten Polymerisationsbedingungen eine Reaktionszeit von etwa bis zu 15 min eingehalten werden muß, um ein geeignetes COC zu erhalten, das einzeln oder als erste Legierungskomponente in einem Blend verwendet werden kann. Die im Bereich, der von den Proben B bis D vorgegeben ist, anfallenden COC sind jeweils als zweite Legierungskomponente in einem Blend geeignet.

### Beispiel 2

Es wurde analog zu Beispiel 1 verfahren, wobei folgende Verfahrensparameter geändert wurden:

| | |
|---|---|
| Reaktionstemperatur: | 20 °C |
| Katalysatormenge: | 240 mg |
| Probenentnahme: | 10-minütig. |

Die Eigenschaften der Proben sind in Tabelle 2 wiedergegeben. Es gelten die analogen Ausführungen wie zu den Proben A bis D des Beispiels 1 in bezug auf die Kurven M_{w}/Mₙ und M_{w}. Um ein geeignetes COC zu erhalten, ist die Reaktion nach weniger als 14 Min. abzubrechen. Die im Bereich, den die Proben F bis H abdecken, anfallenden COC sind jeweils als zweite Legierungskomponente in einem Blend geeignet.

**Tabelle 2**

| Probe | Zeit nach Kat.-Zugabe (min) | Glastemperatur T_{g} (°C) | M_{w} (g/mol) | M_{w}/Mₙ |
|---|---|---|---|---|
| E | 10 | 140 | 1,67x10⁴ | 1,1 |
| F | 20 | 143 | 2,83x10⁴ | 1,1 |
| G | 30 | 143 | 3,99x10⁴ | 1,1 |
| H | 40 | 144 | 4,88x10⁴ | 1,1 |

### Beispiel 3

Analog zu Beispiel 1 wurden 54 g eines Polymers hergestellt, wobei, abweichend von Beispiel 1, folgende Polymerisationsbedingungen gewählt wurden:
- Konzentration der eingesetzten Norbornenlösung: 27 %;
- Ethylendruck: 3 bar
- Katalysator: Fluorenyl-cyclopentadienyl-diphenyl-carbyl-zirkoniumdichlorid;
- Menge Katalysator: 10 mg;
- Menge Methylaluminoxanlösung: 20 ml;
- Reaktionsdauer: 30 min.

Das erhaltene Polymer hat eine Glastemperatur von 141 °C, ein M_{w} = 1,63 · 10⁵ und eine Molmassenverteilung M_{w}/Mₙ = 2,0.

### Beispiel 4

Die Polymerisation erfolgte analog zu Beispiel 1. Als Katalysatorlösung wurde 40 cm³ MAO-Lösung mit 500 mg rac-Dimethylsilyl-bis-(1-indenyl)zirkondichlorid eingesetzt. Es wurde 30 min bei 6 °C und 4 bar Ethylenüberdruck polymerisiert. Es konnten 3,8 g Produkt erhalten werden. Die Glastemperatur betrug 122 °C. Nach GPC (analog den Beispielen 1 und 2) wurde ein Molekulargewicht M_{w} von 2540 g/mol und eine Molmassenverteilung M_{w}/Mₙ von 1,15 gefunden.

### Beispiel 5

Die Polymerisation erfolgte analog zu Beispiel 4. Es wurde 10 Min. bei 20 °C und 6 bar Ethylenüberdruck polmyerisiert. Isoliert wurden 10,4 g Material. Die Glastemperatur betrug 142 °C. Das Molekulargewicht M_{w} betrug 7240 g/mol, und die Molmassenverteilung M_{w}/Mₙ betrug 1,10.

### Beispiel 6

Es wurden 2,4 g eines Polymers gemäß Beispiel 3 (zweite Legierungskomponente des Blends) und 0,6 g eines Polymers gemäß Beispiel 4 (erste Legierungskomponente des Blends) in 147 g Toluol gelöst und anschließend durch langsames Eintropfen in Aceton gefällt. Das ausgefällte Material wurde dann bei 80 °C einen Tag im Trockenschrank getrocknet. Die so erhaltene Polymerlegierung zeigte bei der DSC-Messung mit einer Aufheizrate von 20 °C/min eine Glastemperatur von 138 °C.

### Beispiel 7

Es wurden 48 g eines Polymers gemäß Beispiel 3 (zweite Legierungskomponente des Blends) und 12 g eines Polymers gemäß Beispiel 5 (erste Legierungskomponente des Blends) gemischt und in einem "Rheomix-600-Meßkneter" der Firma Haake 15 Minuten, mit einer Drehzahl von 60 Umdrehungen/Minute, bei 225 °C, geknetet. Die dabei erhaltene Legierung war transparent und zeigte bei der DSC-Messung mit einer Aufheizrate von 20 °C/min eine Glastemperatur von 141 °C.

### Beispiel 8

Aus den Materialien gemäß den Beispielen 3, 6 und 7 wurden durch 15 Minuten Pressen bei 225 °C runde Preßplatten mit einem Durchmesser von 25 mm hergestellt. Alle Preßplatten waren farblos und transparent. Zur Bewertung und zum Vergleich der Verarbeitbarkeit dieser Materialien wurden die so erhaltenen Preßplatten zur Bestimmung der Viskosität η verwendet. Das dazu benutzte Gerät war ein "Rheometrics Dynamic Spektrometer RDS 2". Die Messungen wurden in der Geometrie "Scheibe-Scheibe" bei 270 °C und bei zwei Frequenzen durchgeführt. Die Meßergebnisse sind in Tabelle 3 zusammengestellt.

**Tabelle 3**

| Probenbezeichnung nach Beispiel Nr. | Frequenz 1 (1 rad/s) (Pa.s) | Frequenz 2 (10 rad/s) (Pa.s) |
|---|---|---|
| 3 | 6,41x10³ | 2,63x10³ |
| 6 | 2,47x10³ | 1,09x10³ |
| 7 | 2,67x10³ | 1,15x10³ |

## Patentansprüche

1. Substrat aus zumindest einem Cycloolefin-Copolymer für Aufzeichnungsmedien, dadurch gekennzeichnet, daß das Cycloolefin-Copolymer eine Molmassenverteilung M_{w}/Mₙ < 2,0 und ein Molekulargewicht M_{w} kleiner/gleich 30000 g/mol aufweist und eine Glastemperatur von 100 °C bis 220 °C besitzt.

2. Substrat nach Anspruch 1, dadurch gekennzeichnet, daß die Dichte des Cycloolefin-Copolymers 1,01 bis 1,08 g/cm³ und der Brechungsindex 1,52 bis 1,54 betragen.

3. Substrat nach Anspruch 2, dadurch gekennzeichnet, daß der E-Modul des Cycloolefin-Copolymers 3,0 bis 4,0 GPa und die Reißspannung 30 bis 75 MPa betragen.

4. Substrat nach Anspruch 1, dadurch gekennzeichnet, daß das Cycloolefin-Copolymer aus einem Norbornen-Ethylen-Copolymer besteht.

5. Substrat nach Anspruch 1, dadurch gekennzeichnet, daß das Cycloolefin-Copolymer aus einem Tetracyclododecen-Ethylen-Copolymer besteht.

6. Substrat nach Anspruch 1, dadurch gekennzeichnet, daß zwei oder mehr Cycloolefin-Copolymere mit unterschiedlichen Molmassen miteinander legiert sind, bei denen die Glastemperaturen der Cycloolefin-Copolymere gleich sind oder sich um nicht mehr als 20 °C voneinander unterscheiden.

7. Substrat nach Anspruch 6, dadurch gekennzeichnet, daß ein niedermolekulares Cycloolefin-Copolymer mit einem Molekulargewicht kleiner 30000 g/mol als erste Legierungskomponente mit einem oder mehreren höhermolekularen Cycloolefin-Copolymeren mit einem Molekulargewicht gleich oder größer 15000 g/mol als zweite bzw. weitere Legierungskomponente kombiniert ist.

8. Substrat nach Anspruch 7, dadurch gekennzeichnet, daß die Molmassenverteilungen M_{w}/Mₙ der ersten Legierungskomponente im Bereich von 1,00 bis kleiner 2,00 und der zweiten bzw. von weiteren Legierungskomponenten im Bereich größer/gleich 2,00 und kleiner/gleich 4,00 liegen.

9. Substrat nach Anspruch 6, dadurch gekennzeichnet, daß die Viskosität η des Substratmaterials für eine Frequenz von 1 rad/s bei einer Temperatur von 270 °C kleiner 4x10³ Pa.s ist.

10. Substrat nach Anspruch 6, dadurch gekennzeichnet, daß die Viskosität η des Substratmaterials für eine Frequenz von 10 rad/s bei einer Temperatur von 270 °C kleiner 2x10³ Pa.s ist.

11. Verfahren zur Herstellung eines Substrats für Aufzeichnungsmedien aus zumindest einem Cycloolefin-Copolymer, welches durch Polymerisation ohne Ringöffnung von 0,1 bis 100 Gew.% hergestellt wurde, bezogen auf die Gesamtmenge der Monomeren, mindestens eines Monomers der Formeln I, II, III, IV, V oder VI 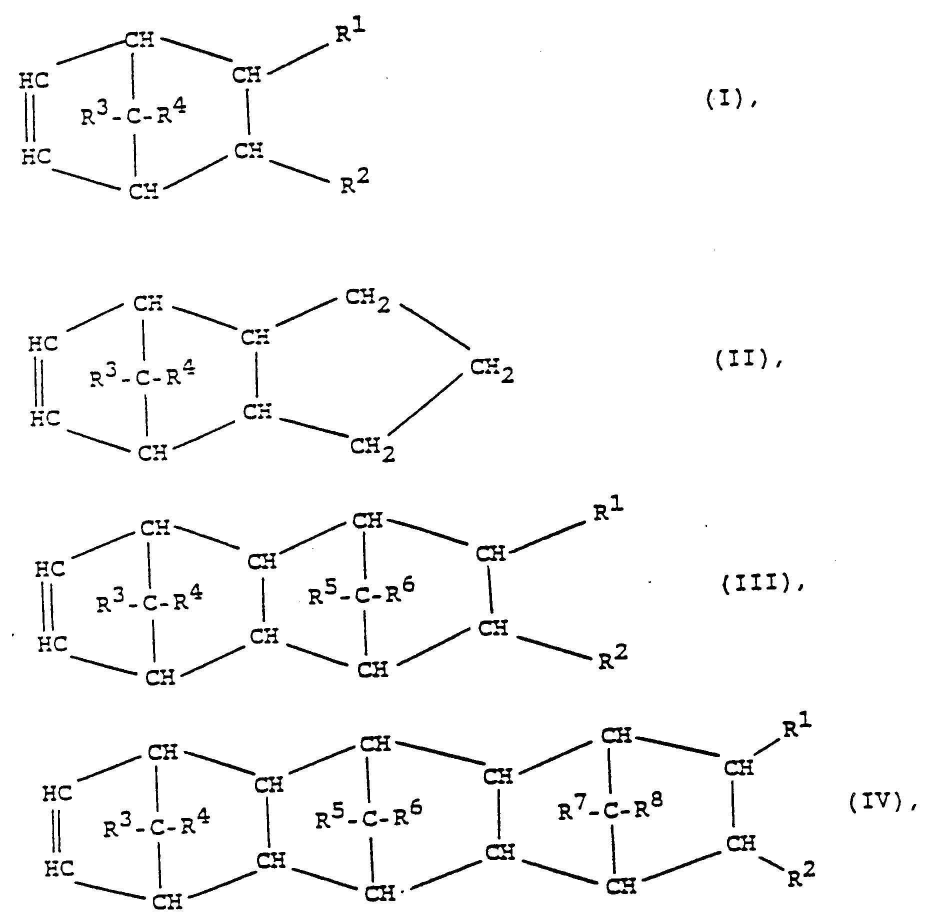 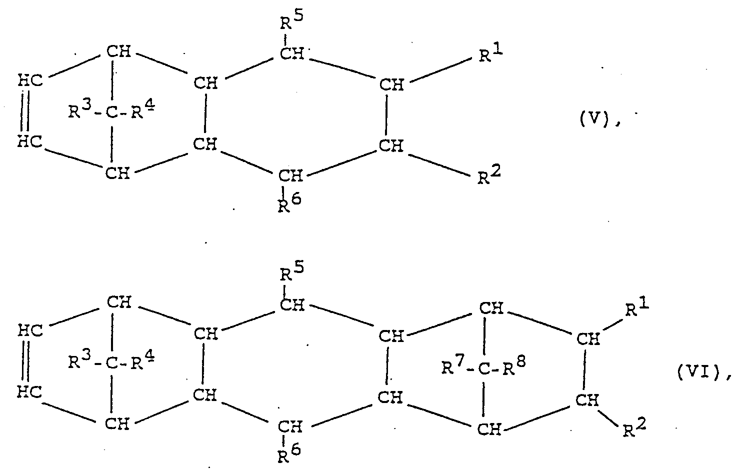 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 99,9 Gew.%, bezogen auf die Gesamtmenge der Monomeren, eines Cycloolefins der Formel VII 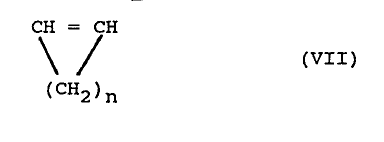 worin n eine Zahl von 2 bis 10 ist, und
0 bis 99,9 Gew.%, bezogen auf die Gesamtmenge der Monomeren, mindestens eines acyclischen 1-Olefins der Formel VIII 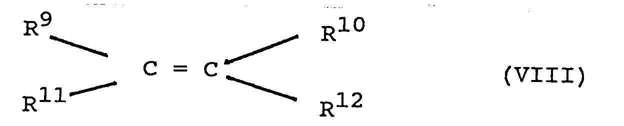 worin R⁹, R¹⁰, R¹¹ und R¹² gleich oder verschieden sind und ein Wasserstoffatom oder einen C₁-C₈-Alkylrest bedeuten, bei Temperaturen von -78 °C bis 150 °C und einem Druck von 0,01 bis 64 bar, in Gegenwart eines Katalysators und Metallocens, dadurch gekennzeichnet, daß ein Cycloolefin der Formel VII oder ein acyclisches 1-Olefin der Formel VIII in einer Norbornenlösung unter Zugabe eines Metallocens in Form einer Katalysatorlösung, Katalysatorsuspension oder eines geträgerten Katalysators polymerisiert wird, daß ein Reaktionsabbruch der Polymerisation 10 bis 60 Min. nach Beginn der Polymerisation erfolgt, daß das gestoppte Polymerisationsmedium in einer Flüssigkeit aus einem Keton, Alkohol, Ester, Amid oder Wasser gefällt oder suspendiert und danach abfiltriert wird, daß das abfiltrierte COC-Polymer getrocknet wird und daß das getrocknete COC-Polymer bei einer Temperatur oberhalb 210 °C thermoplastisch zu Platten verarbeitet wird.

12. Verfahren nach Anspruch 11, dadurch gekennzeichnet, daß die Polymerisation zu einem Zeitpunkt abgebrochen wird, zu dem die Molmassenverteilung M_{w}/Mₙ < 2,0, insbesondere M_{w}/Mₙ ≦ 1,7 oder M_{w}/Mₙ ≦ 1,4 und M_{w} kleiner 30000 ist.

13. Verfahren nach Anspruch 11, wobei mittels Wasserstoffdosierung die Molmasse des COC-Polymers auf < 30000 g/mol eingestellt wird und die Polymerisation zeitlich nicht begrenzt wird.

14. Verfahren nach den Ansprüchen 11 und 12, dadurch gekennzeichnet, daß ein COC-Polymer mit einer Molmassenverteilung M_{w}/Mₙ < 2,0 und zumindest ein COC-Polymer mit einer Molmassenverteilung ≧ 2,0 und kleiner/gleich 4,0 in Lösung oder in Schmelze zu einer Polymerlegierung verarbeitet werden.

15. Verfahren nach Anspruch 10, 13 oder 14, dadurch gekennzeichnet, daß das COC-Polymer bzw. die - legierung zu Platten gepreßt, spritzgegossen oder extrudiert wird.

16. Verfahren nach Anspruch 14, dadurch gekennzeichnet, daß die zwei oder mehr COC-Polymere in Toluol bei Raumtemperatur gelöst, in einem Keton ausgefällt und anschließend getrocknet werden und daß die so erhaltene transparente Polymerlegierung thermoplastisch zu Platten verarbeitet wird.

17. Verfahren nach Anspruch 14, dadurch gekennzeichnet, daß das Lösungsmittel für die zwei oder mehr COC-Polymere Dekahydronaphthalin bei einer Temperatur von 130 bis 140 °C ist.

18. Verfahren nach Anspruch 14, dadurch gekennzeichnet, daß zwei oder mehr COC-Polymere miteinander gemischt und bei einer Temperatur von 220 bis 230 °C zu einer transparenten Polymerlegierung geknetet werden.
